# EUROPÄISCHE PATENTSCHRIFT

(11) **EP 3 412 387 B1**
(45) Veröffentlichungstag und Bekanntmachung des Hinweises auf die Patenterteilung: **20.10.2021**
(21) Anmeldenummer: 18175887.1
(22) Anmeldetag: 05.06.2018
(51) Int. Cl.: B23B 31/00, B23B 31/20, B23B 13/12

(54) **SPANNZANGE UND FÜHRUNGSBUCHSE MIT SPANNZANGE**
COLLET AND GUIDE BUSH WITH COLLET
PINCE DE SERRAGE ET DOUILLE DE GUIDAGE À PINCE DE SERRAGE

(30) Priorität: 08.06.2017 DE 102017112679
(43) Veröffentlichungstag der Anmeldung: 12.12.2018
(73) Patentinhaber: JBS System GmbH, 24119 Kronshagen (DE)
(72) Erfinder: Jeß, Maik, 24119 Kronshagen (DE)
(74) Vertreter: Lobemeier, Martin Landolf

(56) Entgegenhaltungen:
- DE-A1- 3 532 004
- DE-A1-102015 114 710
- JP-A- 2002 052 409
- JP-U- H04 115 514
- KR-B1- 101 527 229

## Beschreibung

Die Erfindung betrifft eine Spannzange gemäß dem Oberbegriff des Anspruchs 1, mit einer Mehrzahl von radial gegeneinander beweglichen Backen, die eine Aufnahme zum Führen einer in einer Drehmaschine zu bearbeitenden Stange ausbilden, wobei jede Backe eine hintere Stirnseite, eine der hinteren Stirnseite gegenüberliegend angeordnete vordere Stirnseite und jeweils eine jeder benachbarten Backe zugewandte, sich zwischen den Stirnseiten erstreckende Seitenfläche aufweist. Die Erfindung betrifft auch eine Führungsbuchse mit einer derartigen Spannzange.

Führungsbuchsen und Spannzangen der eingangs genannten Art sind beispielsweise aus der EP 3 034 212 bekannt. Sie dienen dazu, bei Langdreh-Maschinen die zu bearbeitende Stange während des Bearbeitungsvorgangs abzustützen und zu halten.

Auf diese Weise können sehr lange und schlanke Werkstücke mit geringen Bearbeitungs-Toleranzen hergestellt werden. Toleranzen des Durchmessers der Stange können bei derartigen Führungsbuchsen ausgeglichen und Stangen mit verschiedenen Durchmessern mit derselben Führungsbuchse gehalten werden.

Bei der praktischen Anwendung haben sich nun die beim Bearbeitungsvorgang anfallenden Späne teilweise als problematisch herausgestellt, da diese in die Führungsbuchse, insbesondere in die Spannzange gelangen können und so die Rundlaufgenauigkeit der zu bearbeitenden Materialstange beeinflussen und den Verschleiß der Spannzange erhöhen.

Aufgabe der Erfindung ist es daher, eine Spannzange zu schaffen, deren Funktion durch die von der Drehmaschine produzierten Späne weitgehend unbeeinflusst bleibt.

Diese Aufgabe wird erfindungsgemäß durch die Spannzange mit den Merkmalen von Anspruch 1 gelöst. Die Unteransprüche geben vorteilhafte Ausgestaltungen der Erfindung wieder.

Grundgedanke der Erfindung ist es, einen Luftstrom durch die Spannzange zu erzeugen, der insbesondere den Zwischenraum zwischen den sich gegenüberliegenden Seitenflächen der Backen frei von Spänen hält.

Erfindungsgemäß ist also eine Spannzange mit einer Mehrzahl von radial gegeneinander beweglichen Backen, die eine Aufnahme zum Führen einer in einer Drehmaschine zu bearbeitenden Stange ausbilden, vorgesehen, wobei jede Backe eine hintere Stirnseite, eine der hinteren Stirnseite gegenüberliegend angeordnete vordere Stirnseite und jeweils eine jeder benachbarten Backe zugewandte, sich zwischen den Stirnseiten erstreckende Seitenfläche aufweist. Dabei erstreckt sich in wenigstens einer Backe ein Luftkanal mit einem auf der Oberfläche der Backe angeordneten Einlass und einem auf wenigstens einer der Seitenflächen mündenden Auslass. Der Einlass des bevorzugt als Druckluftkanal ausgebildeten Luftkanals ist dabei auf der hinteren Stirnseite angeordnet, wobei der auf wenigstens einer der Seitenflächen mündende Auslass zum Ausblasen von Spänen in Vorschubrichtung eingerichtet ist. Hierfür kann die Geometrie des Auslasses entsprechend ausgestaltet oder insbesondere ein eine Führung des Luftstroms in Vorschubrichtung bewirkendes Leitelement (innerhalb oder außerhalb des Auslasses) vorgesehen sein.

Insbesondere besteht der Luftkanal aus einem sich in Längsrichtung der Backe erstreckenden ersten Abschnitt und einem sich zwischen dem ersten Abschnitt und dem Auslass erstreckenden zweiten Abschnitt. Besonders bevorzugt erstreckt sich der zweite Abschnitt vom ersten Abschnitt zum Auslass aus Richtung der hinteren Stirnseite in Richtung der vorderen Stirnseite, sodass sich ein Luftstrom durch die Backe von hinten nach vorne ergibt, wobei die Luft im Zwischenraum zwischen benachbart angeordneten Backen schräg nach vorne in Richtung der vorderen Stirnfläche geführt wird.

Der Luftkanal weist bevorzugt jeweils mindestens einen auf beiden Seitenflächen der Backe angeordneten Auslass auf.

Schließlich wird auch eine Führungsbuchse mit einer der vorgenannten Spannzangen nach der Erfindung beansprucht.

Bevorzugt weist die Führungsbuchse eine mit dem Einlass des Luftkanals kommunizierende Luftzuführung auf, wobei die vordere Stirnseite der Spannzange in Richtung des Vorschubs der zu bearbeitenden Stange ausgerichtet ist und die Späne damit in Vorschubrichtung ausgeblasen werden können.

Die Erfindung wird im Folgenden anhand eines in der beigefügten Zeichnung dargestellten, besonders bevorzugt ausgestalteten Ausführungsbeispiels näher erläutert.

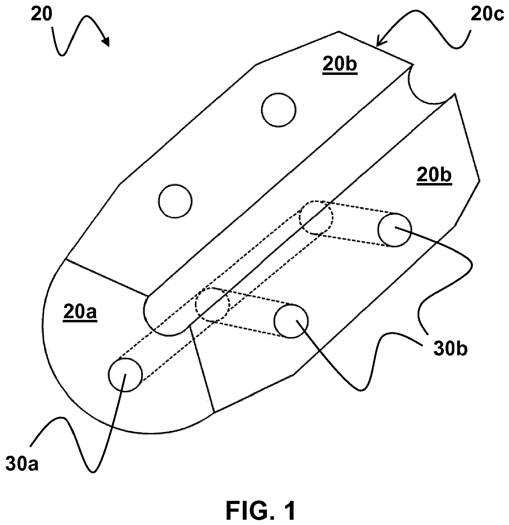

Fig. 1 zeigt beispielhaft eine perspektivische Ansicht einer einzigen Backe einer besonders als Doppelkonuszange bevorzugt ausgestalteten Spannzange, deren grundsätzlicher Aufbau beispielsweise aus der EP 3 034 212 bekannt ist. Nichtsdestoweniger ist die Erfindung ebenso gut bei als Zug- bzw. Druckzangen ausgestalteten Spannzangen anwendbar.

Die dargestellte Backe 20 der Doppelkonuszange weist eine hintere Stirnseite 20a, eine der hinteren Stirnseite 20a gegenüberliegend angeordnete vordere Stirnseite 20c und jeweils eine jeder benachbarten (nicht dargestellten) Backe 20 zugewandte, sich zwischen den Stirnseiten 20a, 20c erstreckende Seitenfläche 20b auf.

In die Backe 20 ist ein sich entlang deren Längsachse erstreckender Luftkanal 30 mit einem auf der hinteren Stirnseite 20a angeordneten Einlass 30a eingebracht. Der Luftkanal 30 weist einen bevorzugt als blind endende Bohrung angelegten ersten Abschnitt auf, der mit quer zu diesen eingebrachten jeweils zweite Abschnitte bildenden Bohrungen kommuniziert, die auf beiden Seitenflächen 20b in jeweils einem Auslass 30b münden.

Wird nun durch den Einlass 30a des Luftkanals 30 Druckluft in den Luftkanal 30 eingeführt, tritt die Druckluft über die auf den Seitenflächen 20b angeordneten Auslässe 30b aus und kann so sich in den Zwischenräumen zwischen den Backen 20 angesammelte Späne fortspülen.

## Patentansprüche

1. Spannzange mit einer Mehrzahl von radial gegeneinander beweglichen Backen (20), die eine Aufnahme zum Führen einer in einer Drehmaschine zu bearbeitenden Stange ausbilden, wobei jede Backe (20) eine hintere Stirnseite (20a), eine der hinteren Stirnseite (20a) gegenüberliegend angeordnete, in Richtung des Vorschubs der zu bearbeitenden Stange ausgerichtete vordere Stirnseite (20c) und jeweils eine jeder benachbarten Backe (20) zugewandte, sich zwischen den Stirnseiten (20a, 20c) erstreckende Seitenfläche (20b) aufweist,
**gekennzeichnet durch**
einen sich in wenigstens einer Backe (20) erstreckenden Luftkanal (30) mit einem auf der hinteren Stirnseite (20a) der Backe (20) angeordneten Einlass (30a) und einem auf wenigstens einer der Seitenflächen (20b) mündenden Auslass (30b) zum Ausblasen von Spänen in Vorschubrichtung.

2. Spannzange nach einem der vorhergehenden Ansprüche, **dadurch gekennzeichnet, dass** der Luftkanal (30) aus einem sich in Längsrichtung der Backe (20) erstreckenden ersten Abschnitt und einem sich zwischen dem ersten Abschnitt und dem Auslass (30b) erstreckenden zweiten Abschnitt gebildet ist.

3. Spannzange nach Anspruch 2, **dadurch gekennzeichnet, dass** sich der zweite Abschnitt vom ersten Abschnitt zum Auslass (30b) aus Richtung der hinteren Stirnseite (20a) in Richtung der vorderen Stirnseite (20c) erstreckt.

4. Spannzange nach einem der vorhergehenden Ansprüche, **dadurch gekennzeichnet, dass** der Luftkanal (30) jeweils mindestens einen auf beiden Seitenflächen (20b) der Backe (20) angeordneten Auslass (30b) aufweist.

5. Führungsbuchse mit einer Spannzange nach einem der vorhergehenden Ansprüche.

6. Führungsbuchse nach Anspruch 5, **gekennzeichnet durch** eine mit dem Einlass (30a) des Luftkanals (30) kommunizierende Luftzuführung.

## Claims

1. Collet comprising a plurality of jaws (20) which can be moved radially relative to one another and which form a receptacle for guiding a rod to be machined in a lathe, each jaw (20) having a rear end face (20a), a front end face (20c) that is arranged opposite to the rear end face (20a) and is oriented in the direction of the forward movement of the rod to be machined, and in each case a side face (20b) that faces each adjacent jaw (20) and extends between the end faces (20a, 20c),
**characterized by**
an air duct (30) extending in at least one jaw (20), which air duct comprises an inlet (30a) arranged on the rear end face (20a) of the jaw (20) and an outlet (30b) that opens onto at least one of the side faces (20b) and is intended for blowing out chips in the direction of forward movement.

2. Collet according to any of the preceding claims, **characterized in that** the air duct (30) is formed from a first portion extending in the longitudinal direction of the jaw (20) and a second portion extending between the first portion and the outlet (30b).

3. Collet according to claim Collet according to any of the preceding claims, **characterized in that** the air duct (30) is formed from a first portion extending in the longitudinal direction of the jaw (20) and a second portion extending between the first portion and the outlet (30b), **characterized in that** the second portion extends from the first portion to the outlet (30b) from the rear end face (20a) toward the front end face (20c).

4. Collet according to any of the preceding claims, **characterized in that** the air duct (30) has at least one outlet (30b) arranged on each of the two side faces (20b) of the jaw (20).

5. Guide bush comprising a collet according to any of the preceding claims.

6. Guide bush according to claim 5, **characterized by** an air supply which communicates with the inlet (30a) of the air duct (30).

## Revendications

1. Pince de serrage comportant une pluralité de mâchoires (20) mobiles radialement les unes vers les autres et formant un logement permettant le guidage d'une barre à usiner dans un tour, chaque mâchoire (20) présentant une face d'extrémité arrière (20a), une face d'extrémité avant (20c) opposée à la face d'extrémité arrière (20a) et orientée dans le sens d'avance de la barre à usiner et respectivement une surface latérale (20b) tournée vers chaque mâchoire (20) adjacente et s'étendant entre les faces d'extrémité (20a, 20c),
**caractérisée par**
un conduit d'air (30) s'étendant dans au moins une mâchoire (20) comportant une entrée (30a) disposée sur la face d'extrémité arrière (20a) de la mâchoire (20) et une sortie (30b) permettant le soufflage de copeaux dans le sens d'avance débouchant sur au moins l'une des surfaces latérales (20b).

2. Pince de serrage selon l'une des revendications précédentes, **caractérisée en ce que** le conduit d'air (30) est formé par une première section s'étendant dans le sens longitudinal de la mâchoire (20) et une seconde section s'étendant entre la première section et la sortie (30b).

3. Pince de serrage selon la revendication pince de serrage selon l'une des revendications précédentes, **caractérisée en ce que** le conduit d'air (30) est formé par une première section s'étendant dans le sens longitudinal de la mâchoire (20) et une seconde section s'étendant entre la première section et la sortie (30b), **caractérisée en ce que** la seconde section s'étend de la première section à la sortie (30b) depuis la direction de la face d'extrémité arrière (20a) en direction de la face d'extrémité avant (20c).

4. Pince de serrage selon l'une des revendications précédentes, **caractérisée en ce que** le conduit d'air (30) présente respectivement au moins une sortie (30b) disposée sur les deux faces latérales (20b) de la mâchoire (20).

5. Douille de guidage comportant une pince de serrage selon l'une des revendications précédentes.

6. Douille de guidage selon la revendication 5, **caractérisée par** une alimentation en air communiquant avec l'entrée (30a) du conduit d'air (30).
